# EUROPÄISCHE PATENTSCHRIFT

(11) **EP 2 633 220 B1**
(45) Veröffentlichungstag und Bekanntmachung des Hinweises auf die Patenterteilung: **09.09.2015**
(21) Anmeldenummer: 11771193.7
(22) Anmeldetag: 21.10.2011
(51) Int. Cl.: F16L 55/033, F01N 1/00, F02C 7/24, F02M 35/12

(54) **SCHEIBENDÄMPFER FÜR LADELUFTLEITUNGEN EINES VERBRENNUNGSMOTORS MIT TURBOLADER**
DISC DAMPER FOR CHARGE AIR LINES OF AN INTERNAL COMBUSTION ENGINE HAVING A TURBOCHARGER
SILENCIEUX POUR CONDUITS D'AIR DE SURALIMENTATION D'UN MOTEUR À COMBUSTION INTERNE DOTÉ D'UN TURBOCOMPRESSEUR

(30) Priorität: 25.10.2010 DE 102010042893
(43) Veröffentlichungstag der Anmeldung: 04.09.2013
(73) Patentinhaber: Umfotec Umformtechnik Gmbh, 37154 Northeim (DE); Denker, Dietrich, 70599 Stuttgart (DE)
(72) Erfinder: DENKER, Dietrich, 70599 Stuttgart (DE); HUTH, Stefan, 37154 Northeim (DE)
(74) Vertreter: Bauer, Wulf
(86) Internationale Anmeldenummer: PCT/EP2011/068442
(87) Internationale Veröffentlichungsnummer: WO 2012/055784

(56) Entgegenhaltungen:
- EP-A1- 1 255 071
- EP-A2- 1 433 948
- EP-B1- 0 791 135
- DE-A1- 19 943 246
- GB-A- 2 365 066
- US-A- 4 327 817

## Beschreibung

Die Erfindung bezieht sich auf einen Scheibendämpfer für Ladeluftleitungen eines Verbrennungsmotors mit Turbolader, wobei der Scheibendämpfer insbesondere hinter dem Turbolader angeordnet ist, mit einem Einlass, einem Auslass und mit mindestens einer zwischen Einlass und Auslass angeordneten Schlitzkammer.

Ein derartiger Dämpfer bzw. Dämmer ist aus der DE 198 55 708 B4 bekannt. Dieser Dämpfer hat sich in der Praxis bewährt, er ist jedoch relativ groß. Im Automobilbau werden zunehmend Verbrennungsmotoren mit Turboladern, insbesondere Einspritzmotoren mit Turboladern, eingesetzt. Dies führt zu Motoren mit immer kleinerem Hubraum und auch immer kleineren Abmessungen. Dadurch werden auch die Bauräume kleiner. Der für die Schalldämmung zur Verfügung stehende Platz wird zunehmend geringer.

Die vom Motor abgegebenen Betriebsgeräusche sollen vorgegebenen Anforderungen entsprechen, es wird ein guter Klang (sound) des Motors gewünscht. Bei turbogeladenen Motoren treten Geräusche durch die Zerteilung der Ladeluft innerhalb des Turboladers auf, weitere Geräusche kommen hinzu. Insbesondere im menschlichen Hörbereich liegende Geräusche sollen soweit wie möglich gedämmt werden, es soll eine gewünschte Geräuschemission erreicht werden. Dabei fordern die Motorenentwickler zunehmend Schallminderungen in weiten Frequenzbereichen, beispielsweise im Bereich 400 bis 4 000 Hz, und dies bei kleinsten Bauräumen.

Der vorbekannte Dämpfer ist als Rohrkammerdämpfer ausgeführt, er zwei axial hintereinander angeordnete Schlitzkammern. Damit lassen sich die geforderten kleinen Abmessungen und eine Mindestdämpfung in einem ausreichend großen Frequenzbereich nicht erzielen.

Gewünscht ist somit eine Dämpfung in einem ausreichend breiten Frequenzbereich bei möglichst kleiner Bauform. Der Dämpfer soll sich günstig fertigen lassen, er soll aus einfach herzustellenden und zusammensetzbaren Bauteilen montierbar sein. Als Material kommen Metall und/oder geeignete Kunststoffe in Frage. Zu berücksichtigen ist eine Arbeitstemperatur von 180° C und darüber und ein Druck von üblicherweise 1,8 bar im Dämpfer.

Aufgabe der Erfindung ist es daher, den vorbekannten Dämpfer zu verbessern und dahingehend weiterzuentwickeln, dass er möglichst geringe Abmessungen aufweist, sich an enge Bauräume anpassen lässt und für einen breiteren Frequenzbereich geeignet ist.

Diese Aufgabe wird gelöst durch den Dämpfer mit den Merkmalen des Anspruchs 1.

Durch Kombination aus mindestens einer eingangsseitigen Schlitzkammer, die aufgrund ihrer Auslegung relativ breitbandig ist, und dahinter angeordneten, ebenfalls relativ breitbandigen Spaltkammern wird insgesamt ein Scheibendämpfer erhalten, der eine minimale Dämpfung von 20 dB und darüber für einen ausreichend breiten Frequenzbereich, z.B. zwischen mit einem Verhältnis von fo/fu grösser oder gleich 2 ermöglicht, dabei ist fu die untere Frequenz und fo die obere Frequenz des betrachteten Frequenzbereichs. Der Frequenzbereich beträgt beispielsweise 400 Hz bis 4 000 Hz.

In einer kinematischen Umkehr ist es auch möglich, Einlass und Auslass zu vertauschen. Dabei bleibt die Bauweise gleich, es wird lediglich die Richtung der Durchströmung des Dämpfers geändert.

Durch die Kombination von mindestens einer Schlitzkammer und mehreren Spaltkammern, die jeweils durch ihre Geometrie breitbandig ausgeführt sind, wird eine bisher nicht bekannte, relativ kleine Bauform bei einer hohen und hinsichtlich der Frequenz durchgängig breiten Dämmung erzielt.

Unter einer Schlitzkammer wird ein Resonator verstanden, der einen Schlitz und eine Hohlkammer aufweist. Die Hohlkammer ist über den Schlitz mit einem Innenraum des Dämpfers verbunden und zugänglich. Der Schlitz erstreckt sich über einen nur geringen Teil der axialen Länge, über den sich die Hohlkammer erstreckt, beispielsweise weniger als 20%, insbesondere weniger als 10% der axialen Länge der Hohlkammer. Schlitzkammern werden auch als Helmholtzresonatoren bezeichnet.

Unter einer Spaltkammer werden Resonatoren verstanden, die einen Spalt und einen Hohlraum aufweisen. Der Hohlraum ist über seine gesamte axiale Länge über den Spalt zugänglich. Spaltkammern werden auch als Lambda/4-Resonatoren bezeichnet. Lambda ist die Wellenlänge.

Zwischen Einlass und Auslass erstreckt sich ein Kanal des Innenraums. Er hat im Wesentlichen einen konstanten Querschnitt und wird teilweise durch einen Zylinder definiert. Der Kanal kommuniziert mit dem Schlitz und den Spalten. Diese erstrecken sich jeweils über 360° Umlauf.

Die Schlitzkammer, im Folgenden auch primäre Schlitzkammer genannt, weicht von den Schlitzkammern nach dem Stand der Technik deutlich ab. Sie hat radiale Innenabmessungen, die im Gegensatz zum Stand der Technik bei einem Umlauf um die Achse des Innenkanals nicht konstant sind, sondern sich deutlich ändern. Unter deutlich ändern wird eine Änderung um mindestens 30%, vorzugsweise mindestens 80% und insbesondere mindestens 150% verstanden.

In einer Alternative und vorzugsweise in Kombination mit dem sich ändernden radialen Innenmaß nach dem vorangegangenen Absatz unterscheidet sich die Schlitzkammer vom Stand der Technik dadurch, dass sie ein axiales Innenmaß aufweist, das sich bei einem Umlauf um die Achse des Innenkanals deutlich ändert. Eine deutliche Änderung ist wie im vorangegangenen Absatz definiert.

Aufgrund des sich beim Umlauf deutlich ändernden radialen Innenmaßes ist die Schlitzkammer geometrisch gut an geforderte Bauräume anpassbar. Die Schlitzkammer und damit auch der gesamte Scheibendämpfer können konstruktiv so ausgelegt werden, dass sich die Schlitzkammer dort, wo der Motorhersteller einen freien Innenraum zur Verfügung stellen kann, hin erstreckt und diesen freien Innenraum mehr oder weniger ausfüllt. Es ist nun nicht mehr so, dass rings um die Achse des Innenkanals für den Scheibendämpfer ein Raum mit gleichbleibender radialer Abmessung vorhanden sein muss. Es wird also nicht mehr ein Bauraum in Form eines Schlauches benötigt, der zentrisch zur Achse des Innenkanals verläuft und ggf. gekrümmt oder geknickt verläuft, vielmehr ist der Scheibendämpfer nun nicht mehr in einer Radialebene drehsymmetrisch. Er kann konstruktiv so ausgelegt sein, dass die Entfernung zu einem ersten Bauteil von der Achse des Innenkanals, wobei sich dieses Bauteil in einer ersten Winkelposition befindet, um den Faktor zwei bis drei kleiner ist, als der Abstand zu einem anderen Bauteil, das sich in einer zweiten Winkelposition befindet. Der angesprochene Schlauch, welcher das äußere des Scheibendämpfers einhüllt, verläuft also deutlich versetzt zur Achse des Innenkanals. Die Achse des Innenkanals bildet nun nicht mehr das Zentrum, sondern ist deutlich aus dem Zentrum versetzt.

Dabei können der genannte Schlauch und damit die Außenkontur des Scheibendämpfers eine weitgehend beliebige Form haben. Die Form kann durch eine Kreislinie begrenzt sein, die deutlich exzentrisch zur Achse des Innenkanals ist. Die Exzentrizität ist mindestens 30%, insbesondere mindestens 80% des Durchmessers. Die Form kann durch ein Vieleck mit deutlich abgerundeten Ecken begrenzt sein, beispielsweise durch ein Viereck. Sie kann auch durch andere Kurven wie beispielsweise eine Ellipse, begrenzt sein.

Die Hohlkammer der primären Schlitzkammer hat ein definiertes Volumen. Die primäre Schlitzkammer hat in Axialrichtung gesehen, einen Schlitz mit in Umlaufrichtung im Wesentlichen konstanter Breite, die Abweichung liegt unter 80%. Die Hohlkammer weist eine unregelmäßige Verteilung des Volumens der Hohlkammer um die Achse des Innenkanals auf. Die Erfindung lehrt somit eine an die vorhandenen Bauräume angepasste Ausbildung der Hohlkammer. Dort, wo der vorhandene Bauraum für den Motor einen Platz lässt, soll sich die Hohlkammer hin erstrecken. Dort wo praktisch nur sehr wenig Bauraum vorhanden ist, wird auch die Hohlkammer mit kleinerem radialen Innenmaß und/oder kleinerem axialen Innenmaß ausgeführt.

Auch die Spaltkammern sind den vorhandenen, vom Motorhersteller zur Verfügung gestellten Baumräumen besser angepasst, als dies im Stand der Technik der Fall ist. Die Spaltkammern haben in einer bevorzugten Ausbildung der Erfindung ein radiales Innenmaß, das sich deutlich ändert, wenn man einmal um die Achse des Innenkanals umläuft. Die Spaltkammern sind dadurch relativ breitbandig. Sie bieten über den Umlaufwinkel verteilt unterschiedliche Resonanzfrequenzen an. Dies führt zu der gewünschten Breitbandigkeit. Unter deutlicher Abweichung wird die oben gegebene Definition verstanden.

Vorzugsweise ist der Scheibendämpfer in unmittelbarer Nähe des Turboladers angeordnet und insbesondere mehr oder weniger in den Turbolader integriert.

Der Auslass hat eine Auslassachse, der Einlass hat eine Einlassachse. Der Scheibendämpfer weist vorzugsweise einen Winkel von mindestens 10 Grad, insbesondere von mindestens 20 Grad zwischen der Einlassachse und der Auslassachse auf. Der Scheibendämpfer kann auch gradlinig ausgebildet sein, so dass seine Achse gradlinig durchläuft. Er ist vorzugsweise aus mehreren geraden und/oder gekrümmten Abschnitten zusammengesetzt.

Ausreichend ist, wenn eines der drei Merkmale des Anspruchs 1 bei einem Scheibendämpfer erfüllt sind. Vorzugsweise sind zwei Merkmale erfüllt. Das optimale Resultat erhält man bei Erfüllung aber drei Merkmale.

Bei den Spaltkammern ist die Konstruktion vorzugsweise so, dass das axiale Innenmaß konstant ist, also sich bei einem Umlauf um die Achslinie nicht ändert. Vorzugsweise sind die Spaltkammern durch seitliche Wände begrenzt, die in Ebenen liegen, welche parallel zueinander verlaufen.

Vorzugsweise verlaufen die Änderungen der Innenmaße stetig, insbesondere stetig differenzierbar. Die Änderungen sollen so erfolgen, dass insbesondere bei den Spaltkammern für jede einzelne Frequenz ein ausreichendes Teilvolumen der Hohlkammer zur Verfügung steht.

Vorzugsweise werden die Schlitzkammer und die mindestens zwei Spaltkammern nach außen hin durch einen Mantel begrenzt, der eine Querschnittsform hat, die sich in axialer Richtung nicht ändert. Insbesondere wird er durch ein gerades Prisma begrenzt.

Weitere Vorteile und Merkmale ergeben sich aus den übrigen Ansprüchen sowie der nun folgenden Beschreibung von zwei nicht einschränkend zu verstehenden Ausführungsbeispielen der Erfindung, die unter Bezugnahme auf die Zeichnung näher erläutert werden. In der Zeichnung zeigen:
- Fig. 1:: eine schematische Seitenansicht eines Turboladers, eines Scheibendämpfers und eines Motors mit gerader Achslinie,
- Fig. 2:: ein axiales Schnittbild eines Rohrkammerdämpfers mit nicht gerade verlaufender Achslinie,
- Fig. 3:: eine perspektivische Ansicht des Rohrkammerdämpfers nach Fig. 2 mit Blickrichtung auf den Einlass, und
- Fig. 4:: einen Schnitt entlang der Schnittebene IV-IV in Fig. 2.

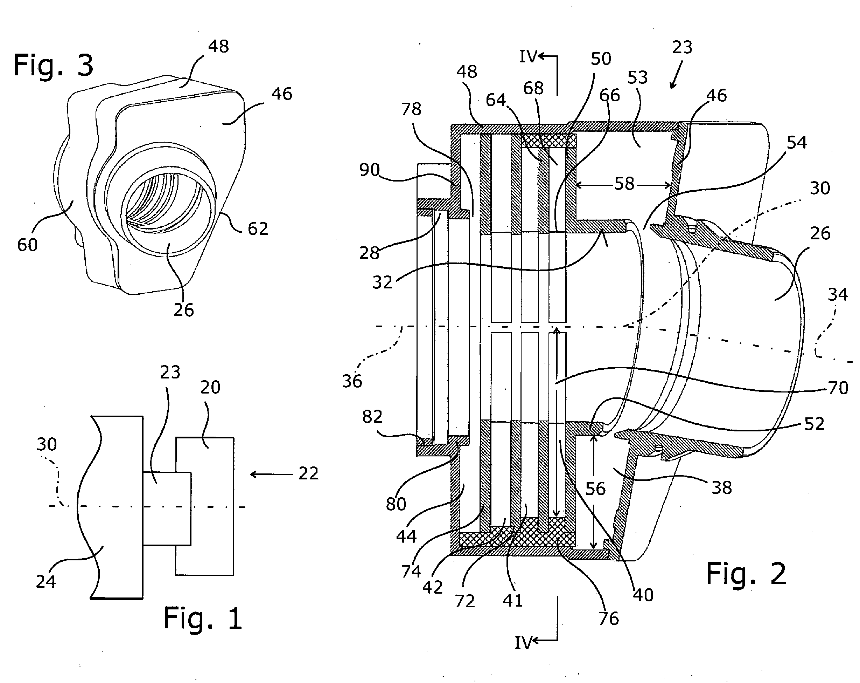

Figur 1 zeigt schematisch angedeutet einen Turbolader 20, in den entsprechend einem Pfeil 22 Luft einströmt. Die verdichtete Luft strömt durch einen Scheibendämpfer 23 zu einem Verbrennungsmotor 24. Der Scheibendämpfer 23 ist Bestandteil einer Ladeluftleitung, es können weitere Bauteile einer Ladeluftleitung zwischen Verbrennungsmotor 24 und Turbolader 20 und/oder vor dem Turbolader 20 vorgesehen sein. Der Dämpfer 23 kann auch in einer Ladeluftleitung vor dem Turbolader angeordnet sein. Der Dämpfer 23 ist teilweise in den Turbolader 20 integriert.

Das Folgende gilt auch für das zweite Ausführungsbeispiel nach den Figuren 2 bis 4: Der Scheibendämpfer hat einen Einlass 26 und einen Auslass 28. Er hat eine Achslinie 30, die als Mittellinie eines Innenkanals 32 definiert ist. Letzerer hat vom Einlass 26 zum Auslass 28 einen im Wesentlichen gleichbleibenden, runden Querschnitt. Die Achslinie 30 stellt auf der Seite des Einlasses 26 mit einer Einlassachse 34 zusammen. Im Bereich des Auslasses 28 folgt die Achslinie 30 einer Auslassachse 36.

Im Falle des zweite Ausführungsbeispiels steht die Einlassachse 34 in einem Winkel von etwa 10° zur Auslassachse 36. Andere Werte in einem Bereich von 0-30° sind möglich.

Bei der Beschreibung des Dämpfers 23 wird der Begriff "vorn" für ein Objekt verwendet, das näher am Einlass 26 liegt als ein damit verglichenes Teil. Es wird also auf die Richtung der Durchströmung entsprechend dem Pfeil 22 abgestellt.

Der Dämpfer 23 hat unmittelbar am Einlass 26 eine primäre Schlitzkammer 38. An sie schließen sich drei Spaltkammern 40, 41 und 42 an, die gleichachsig hintereinander angeordnet sind. Hinter ihnen befindet sich eine sekundäre Schlitzkammer 44, die sich in unmittelbarer Nähe eines Auslasses 28 befindet.

Die primäre Schlitzkammer 38 wird durch eine Vorderwand 46, einen Mantel 48, eine Hinterwand 50 und ein Rohrstück 52 begrenzt. Letzteres bildet einen Schlitz 54 aus. Dieser hat eine Schlitzbreite, die in axialer Richtung gemessen wird, die Schlitzbreite ist eine Funktion des Umfangs. Sie ändert sich in ihrer Breite etwa um den Faktor 2. Anders ausgedrückt stehen die kleinste Schlitzbreite, in Figur 2 unten, und die größte Schlitzbreite, in Figur 2 oben, etwa im Verhältnis 1:2 zueinander. Zwischen diesen beiden extremen Werten ändert sich die Schlitzbreite proportional mit dem Winkel.

Wie Figur 2 zeigt, hat die primäre Schlitzkammer ein radiales Innenmaß 56, und ein axiales Innenmaß 58. Beide sind eine Funktion des Winkels 59 um die Achslinie 30. Der Ort, an dem das radiale Innenmaß 56 bzw. das axiale Innenmaß 58 gemessen werden, ist frei wählbar. Es gilt jedoch, dass das radiale Innenmaß 56 auf einer Radialebene gemessen wird. Im gezeigten Ausführungsbeispiel ist das radiale Innenmaß 56 parallel zur Hinterwand 50 und in einem konstanten axialen Abstand von dieser gemessen. Die Radialebene ist dann eine Radialebene zum hinteren Teilstück der Achslinie 30. Alternativ kann man auch das radiale Innenmaß 56 parallel zur Vorderwand 46 messen. Dann ist die Radialebene auf das vordere Teilstück der Achslinie 30, also auf die Einlassachse 34 bezogen. Ebenso gilt für das axiale Innenmaß 58, dass es auf einem Zylindermantel gemessen wird, dessen Zylinderachse ein Teilstück der Achslinie 30 ist. Im gezeigten Ausführungsbeispiel ist die Zylinderachse das hintere Teilstück der Achslinie 30, also die Auslassachse 36.

Das axiale Innenmaß 58 ist rechtwinklig zur Hinterwand 50 angesetzt. In einer Alternative kann man auch rechtwinklig zur Vorderwand 46 messen, dann ist das axiale Innenmaßauf einem Zylindermantel um das vordere Teilstück der Achslinie 30 zu bestimmen. Über den Umfang gesehen, also bei einem Umlauf um 360°, ändern sich die beiden Innenmaße 56 und 58 stetig und stetig differenzierbar. Im gezeigten Ausführungsbeispiel stehen Vorderwand 46 und Hinterwand 50 in einem Winkel von etwa 10° zueinander, sie sind jeweils eben. Dies ist nicht notwendig, in einer anderen Ausführung können sie auch konisch verlaufen, gewellt sein oder dergleichen, dies gilt insbesondere für die Vorderwand 46, bei der größere Freiheiten in der Ausbildung zur Verfügung stehen.

Der Mantel 48 ist im Wesentlichen ein Mantel eines geraden Prismas. Er hat im Querschnitt gesehen die Form eines Quadrates, das an einer Seite eine Ausbuchtung 60 und an der gegenüberliegenden Seite eine Anschrägung 62 hat: Insgesamt kommt dadurch nahezu ein Fünfeck zustande. Dieses Fünfeck hat stark abgerundete Ecken. Die Anschrägung 62 ist gewählt worden, weil an der entsprechenden Stelle nicht ausreichend Bauraum zur Verfügung steht. Die Achslinie 30 ist relativ nahe der Ausbuchtung 60, dort ist auch das radiale Innenmaß 56 am kleinsten. Einen entsprechend kleinen Wert hat es auch im Bereich der Anschrägung 62.

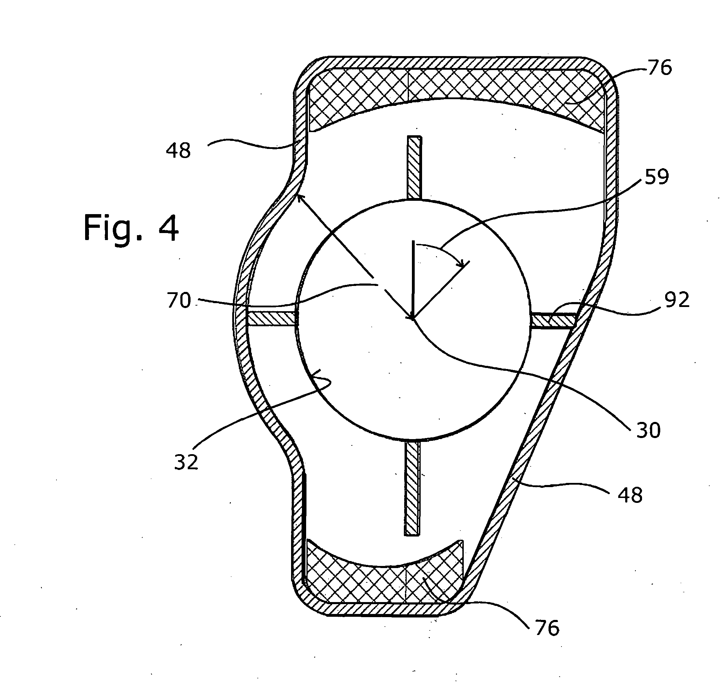

Im Schnittbild gemäß Figur 4 ist ersichtlich, dass das radiale Innenmaß bei einer Winkellage zwischen 2 und 3 Uhr den größten Wert aufweist. Der Wert ist auch hoch für den Bereich von etwa 5 bis 7 Uhr. Als Ausgangspunkt für die Messung des Winkels 59 wird die 12 Uhr Lage gewählt.

Im Folgenden wird auf die drei Spaltkammern 40, 41 und 42 eingegangen. Die erste Spaltkammer 40 wird durch die Hinterwand 50 und eine erste radiale Wand 64 begrenzt. Beide verlaufen in Ebenen, die parallel zueinander sind. Die erste Spaltkammer 40 wird durch einen Spalt 66 und eine Spaltkammer 68 gebildet. Dies gilt auch für die zweite Spaltkammer 41 und für die dritte Spaltkammer 42. Ein radiales Innenmaß 70 ist eine Funktion des Umfangswinkels. Es ändert sich im Wesentlichen ebenso wie das radiale Innenmaß 56 der primären Schlitzkammer 44. Im Gegensatz zur primären Schlitzkammer 38 ist das axiale Innenmaß aller Spaltkammern 40 bis 42 konstant. Anders ausgedrückt verlaufen die radialen Wände 64, 72, 74 parallel zueinander. Die Spaltkammern 40 bis 42 unterscheiden sich in ihren axialen Innenmaßen und/oder in ihren radialen Innenmaßen. Insgesamt sind sie so aufeinander abgestimmt, dass ein Frequenzbereich abgedeckt wird, der oberhalb des Frequenzbereichs der primären Schlitzkammer 38 liegt. Radial nach außen werden die Spaltkammern teilweise durch den Mantel 48 begrenzt, teilweise aber auch durch eine Kulisse 76, die an der Innenwand des Mantels 48 anliegt, die Kulisse 76 hat zwei Teilstücke. Jedes Teilstück deckt einen Winkelbereich von etwa 20 bis 60 Grad ab. Die Kulisse 76 erstreckt sich nicht über den gesamten Umfang, beispielsweise nur über 80°.

An die dritte Spaltkammer 42 schließt sich unmittelbar die sekundäre Schlitzkammer 44 an. Die sekundäre Schlitzkammer 44 ist im Grunde wie die dritte Spaltkammer 42 ausgebildet, unterscheidet sich von dieser aber dadurch, dass ihr Zugang zur Hohlkammer über einen Schlitz 78 erfolgt, der durch einen Kragen 80 begrenzt ist. Letzterer ist konzentrisch zum Auslass 28 und mit diesem vorzugsweise einstückig verbunden. Mit 82 ist ein Flansch des Motors 24 eingezeichnet.

Die sekundäre Schlitzkammer 44 hat konstantes axiales Innenmaß über den gesamten Umfang. Es ändert sich aber das radiale Innenmaß. Diese Änderung ist etwa nach der gleichen Funktion wie für die primäre Schlitzkammer 38, jedoch durch die elastische Einlage 76 beeinflusst, die sich über einen Teilwinkel von beispielsweise 180° erstreckt. Letztere ist in der primären Schlitzkammer 38 nur insoweit vorhanden, als sie bei dem Spalt zwischen Hinterwand 50 und Innenfläche des Mantels 48 ausfüllt.

Die sekundäre Schlitzkammer 44 wird durch eine Rückwand 90 abgeschlossen. Auch sie verläuft parallel zu den radialen Wänden 64, 72 und 74.

Die Kulisse 76 dient dazu, zumindest eine einzelne der Spaltkammern 40-42 abzustimmen. Im gezeigten Ausführungsbeispiel ist sie zweiteilig. Sie besteht aus einem oberen und einem unteren Kulissenstück. Das untere Kulissenstück befindet sich in allen drei Spaltkammern 40-42 und auch in der sekundären Schlitzkammer 44. Das obere Kulissenstück befindet sich in den drei Spaltkammern 40, 41, 42.

Durch eine derartige Kulisse 76 können unterschiedliche Dämmungsverhalten eingestellt werden. Eine Kulisse 76 ist grundsätzlich nicht erforderlich. Vorteilhaft ist sie dann, wenn mehrere unterschiedliche Verbrennungsmotoren eines Herstellers, einschließlich unterschiedlicher sportlicher Varianten, mit unterschiedlichen Ausführungen des Scheibendämpfers 23 ausgerüstet werden sollen und/oder unterschiedliche Eigenschaften bei gleicher Bauform verlangt werden. In diesem Fall ist es günstig, unter Beibehaltung sonstiger Teile, insbesondere des Mantels 48, aller Wände, des Einlasses 26 und des Auslasses 28 auf einfache Weise unterschiedliche Scheibendämpfer 23 herstellen zu können. Für diesen Fall ist es vorteilhaft, wenn beispielsweise der Mantel 48 zweigeteilt ist, so dass auf eine Innenbaueinheit das mindestens eine Teil der Kulisse 76 von.außen aufgesteckt werden kann und anschließend die Halbschalen des Mantels 48 darübergelegt und geschlossen werden. Dadurch wird das mindestens eine Bauteil der Kulisse 76 festgelegt.

Bei der Herstellung kann ein Innenbauteil eingesetzt werden, das die Hinterwand, die erste radiale Wand 64, die zweite radiale Wand 72, die dritte radiale Wand 74 und das hintere Teilstück des Rohrstücks 52 ausbildet, vorzugsweise einstückig ausbildet. Damit dieses Innenbauteil zusammenhängt, sind insgesamt vier Stege 92 vorgesehen, die insbesondere aus Figur 4 ersichtlich sind. Sie verlaufen in den Winkelpositionen 12 Uhr, 3 Uhr, 6 Uhr und 9 Uhr.

## Patentansprüche

1. Scheibendämpfer für eine Ladeluftleitung eines Verbrennungsmotors (24) mit Turbolader (20), wobei der Dämpfer (23) insbesondere hinter dem Turbolader (20) angeordnet ist, mit einem Einlass (26), einem Auslass (28) und mit einer Achslinie (30), die als Mittellinie eines Innenkanals (32) definiert ist, und mit mindestens einer zwischen Einlass (26) und Auslass (28) angeordneten Schlitzkammer (38), die einen sich über 360° Umlauf erstreckenden Schlitz (54) aufweist, und ausgehend vom Einlass (26) unmittelbar hinter dem Einlaß (26) die mindestens eine Schlitzkammer (38) angeordnet ist, **dadurch gekennzeichnet, dass** axial hinter der mindestens einen Schlitzkammer (38) mindestens zwei Spaltkammern vorgesehen sind, die jeweils einen sich über 360° Umlauf erstreckenden Spalt (66) aufweisen und die axial hintereinander angeordnet sind, dass der lichte Abstand zwischen den Spalten (66) zweier benachbarter Spaltkammern (40, 41, 42) in Axialrichtung gesehen kleiner ist als die axiale Breite jedes einzelnen Spalts (66) der beiden benachbarten Spaltkammern (40, 41, 42) und dass mindestens eines der folgenden Merkmale erfüllt ist, vorzugsweise zwei und insbesondere alle erfüllt sind:
- die Schlitzkammer (38) weist ein radiales Innenmaß (56) auf, das sich in Umfangsrichtung ändert und/oder
- die Schlitzkammer (38) weist ein axiales Innenmaß (58) auf, das sich in Umfangsrichtung ändert, und/oder
- mindestens eine Spaltkammer weist ein radiales Innenmaß (56, 70) auf, das sich in Umfangsrichtung ändert.

2. Scheibendämpfer nach Anspruch 1, **dadurch gekennzeichnet, dass** mehrere Spaltkammern vorgesehen sind, und dass die mehreren Spaltkammern Kammerwände (64, 72, 74) aufweisen, die rechtwinklig zu einer Achslinie (30) verlaufen.

3. Scheibendämpfer nach einem der vorangegangenen Ansprüche, **dadurch gekennzeichnet, dass** die Schlitzkammer (38) eine Vorderwand (46) und eine Hinterwand (50) aufweist, und dass die Vorderwand (46) und die Hinterwand (50) in Ebenen liegen, die sich in einem Winkel von 5 bis 20 Grad, vorzugsweise etwa 10 Grad schneiden.

4. Scheibendämpfer nach einem der vorangegangenen Ansprüche, **dadurch gekennzeichnet, dass** das radiale Innenmaß und/oder das axiale Innenmaß der Schlitzkammer (38) sich um mindestens 30% bei einem Umlauf ändert.

5. Scheibendämpfer nach einem der vorangegangenen Ansprüche 1 bis 3, **dadurch gekennzeichnet, dass** die Spaltkammern (40, 41, 42) durch Wände (64, 72, 74) begrenzt sind, die zueinander parallel verlaufen.

6. Scheibendämpfer nach einem der vorangegangenen Ansprüche, **dadurch gekennzeichnet, dass** der Einlass (26) eine Einlassachse (34) und der Auslass (28) eine Auslassachse (36) aufweist, und dass die Einlassachse (34) mit der Auslassachse (36) einen Winkel grösser 5 Grad, insbesondere zwischen 8 Grad und 25 Grad einschließt.

7. Scheibendämpfer nach einem der vorangegangenen Ansprüche, **dadurch gekennzeichnet, dass** mindestens eine Spaltkammer peripher zumindest über einen Winkelbereich durch eine Kulisse (76) begrenzt wird.

8. Scheibendämpfer nach einem der vorangegangenen Ansprüche, **dadurch gekennzeichnet, dass** er eine zweite Schlitzkammer (38) aufweist, die angrenzend an den Auslass (28) angeordnet ist.

9. Scheibendämpfer nach einem der vorangegangenen Ansprüche, **dadurch gekennzeichnet, dass** die lichten Abstände in axialer Richtung gesehen zwischen zwei Spaltkammern für alle Spaltkammern (40, 41, 42) im Wesentlichen konstant sind, jedenfalls nicht mehr als 30% voneinander abweichen.

10. Scheibendämpfer nach einem der vorangegangenen Ansprüche, **dadurch gekennzeichnet, dass** die Änderung mindestens eines er drei Innenmaße in Umfangsrichtung bei einem Umlauf um 360 Grad mindestens 1:2, vorzugsweise mindestens 1:3 beträgt.

## Claims

1. A disc damper for a charge air line of an internal combustion engine (24) having a turbocharger (20), the disc damper (23) being disposed, in particular, behind the turbocharger (20), comprising an inlet (26), an outlet (28) and an axis line (30) defined as the centre line of an internal channel (32), and comprising at least one slit chamber (38) which is disposed between the inlet (26) and the outlet (28) and which has a slit (54) extending over a circuit of 360°, and the at least one slit chamber (38) being disposed, starting from the inlet (26), immediately behind the inlet (26), **characterised in that** at least two gap chambers, which each have a gap (66) extending over a circuit of 360° and which are axially disposed one behind the other, are provided axially behind the at least one slit chamber (38), that the clear distance between the gaps (66) of two adjacent gap chambers (40, 41, 42), seen in the axial direction, is smaller than the axial width of each individual gap of the two adjacent gap chambers (40, 41, 42), and that at least one of the following features is satisfied, preferably two and in particular all are satisfied:
- the slit chamber (38) has a radial inner dimension (56) that changes in the circumferential direction, and/or
- the slit chamber (38) has an axial inner dimension (58) that changes in the circumferential direction, and/or
- at least one gap chamber has a radial inner dimension (56, 70) that changes in the circumferential direction.

2. The disc damper according to claim 1, **characterised in that** several gap chambers are provided, and that the several gap chambers comprise chamber walls (64, 72, 74) that extend at right angles to an axis line (30).

3. The disc damper according to any one of the preceding claims, **characterised in that** the slit chamber (38) has a front wall (46) and a rear wall (50), and that the front wall (46) and a rear wall (50) lie in planes that intersect at an angle of 5 to 20 degree, preferably approximately 10 degrees.

4. The disc damper according to any one of the preceding claims, **characterised in that** the radial inner dimension and/or the axial inner dimension of the slit chamber (38) changes by at least 30% over one circuit.

5. The disc damper according to any one of the preceding claims 1 to 3, **characterised in that** the gap chambers (40, 41, 42), are delimited by walls (64, 72, 74) that extend parallel to one another.

6. The disc damper according to any one of the preceding claims, **characterised in that** the inlet (26) has an inlet axis (34) and that the outlet (28) has an outlet axis (36), and that the inlet axis (34) includes with the outlet axis (36) an angle greater than 5 degrees, in particular between 8 degrees and 25 degrees.

7. The disc damper according to any one of the preceding claims, **characterised in that** at least one gap chamber is peripherally delimited at least over an angle range by a link (76).

8. The disc damper according to any one of the preceding claims, **characterised in that** it comprises a second slit chamber (38) disposed adjacent to the outlet (28).

9. The disc damper according to any one of the preceding claims, **characterised in that** the clear distances, seen in the axial direction, between two gap chambers are substantially constant for all gap chambers (40, 41, 42), in any case deviate by no more than 30% from one another.

10. The disc damper according to any one of the preceding claims,
**characterised in that** the change of at least one of the three inner dimensions in the circumferential direction over a circuit over 360 degrees is at least 1 : 2, preferably at least 1 : 3.

## Revendications

1. Amortisseur de disque pour une conduite d'air de suralimentation d'un moteur à combustion interne (24) à turbocompresseur (20), dans lequel ledit amortisseur (23) est disposé en particulier en aval du turbocompresseur (20), comprenant une entrée (26), une sortie (28) et une ligne axiale (30) qui est définie en tant que ligne centrale d'un canal intérieur (32), ainsi qu'au moins une chambre à fente (38) qui est disposée entre ladite entrée (26) et ladite sortie (28) et qui présente une fente (54) s'étendant tout autour sur 360°, et ladite au moins une chambre à fente (38) est disposée, à partir de l'entrée (26), directement en aval de l'entrée (26), **caractérisé par le fait qu'**au moins deux chambres à fissure sont prévues axialement derrière ladite au moins une chambre à fente (38), qui présentent chacune une fissure (66) s'étendant tout autour sur 360° et qui sont disposées axialement l'une derrière l'autre, que, vu dans la direction axiale, l'écartement entre les fissures (66) de deux chambres à fissure (40, 41, 42) voisines est inférieur à la largeur axiale de chaque fissure (66) individuelle des deux chambres à fissure (40, 41, 42) voisines, et que l'une au moins des caractéristiques suivantes est satisfaite, de préférence deux et en particulier toutes sont satisfaites:
- la chambre à fente (38) présente une dimension intérieure radiale (56) qui change dans la direction circonférentielle, et/ou
- la chambre à fente (38) présente une dimension intérieure axiale (58) qui change dans la direction circonférentielle, et/ou
- au moins une chambre à fissure présente une dimension intérieure radiale (56, 70) qui change dans la direction circonférentielle.

2. Amortisseur de disque selon la revendication 1, **caractérisé par le fait que** plusieurs chambres à fissure sont prévues et que la pluralité des chambres à fissure présente des parois de chambre (64, 72, 74) qui s'étendent à angle droit par rapport à une ligne axiale (30).

3. Amortisseur de disque selon l'une quelconque des revendications précédentes, **caractérisé par le fait que** la chambre à fente (38) présente une paroi avant (46) et une paroi arrière (50) et que ladite paroi avant (46) et ladite paroi arrière (50) se situent dans des plans qui se coupent à un angle compris entre 5 et 20 degrés, de préférence de 10 degrés à peu près.

4. Amortisseur de disque selon l'une quelconque des revendications précédentes, **caractérisé par le fait que** la dimension intérieure radiale et/ou la dimension intérieure axiale de la chambre à fente (38) change d'au moins 30 % dans un tour.

5. Amortisseur de disque selon l'une quelconque des revendications précédentes 1 à 3, **caractérisé par le fait que** les chambres à fissure (40, 41, 42) sont délimitées par des parois (64, 72, 74) qui s'étendent parallèlement entre elles.

6. Amortisseur de disque selon l'une quelconque des revendications précédentes, **caractérisé par le fait que** ladite entrée (26) présente un axe d'entrée (34) et ladite sortie (28) présente un axe de sortie (36) et que l'axe d'entrée (34) définit avec l'axe de sortie (36) un angle supérieur à 5 degré, en particulier compris entre 8 degrés et 25 degrés.

7. Amortisseur de disque selon l'une quelconque des revendications précédentes, **caractérisé par le fait qu'**une chambre à fissure au moins est délimitée de manière périphérique au moins sur une plage angulaire par une coulisse (76).

8. Amortisseur de disque selon l'une quelconque des revendications précédentes, **caractérisé par le fait qu'**il présente une deuxième chambre à fente (38) qui est disposée de façon adjacente à ladite sortie (28).

9. Amortisseur de disque selon l'une quelconque des revendications précédentes, **caractérisé par le fait que**, vus dans la direction axiale, les écartements entre deux chambres à fissure sont pour l'essentiel constants pour l'ensemble des chambres à fissure (40, 41, 42), en tout cas ne diffèrent pas plus de 30 % entre eux.

10. Amortisseur de disque selon l'une quelconque des revendications précédentes, **caractérisé par le fait que** le changement d'au moins l'une des trois dimensions intérieures dans la direction circonférentielle, dans un tour sur 360 degrés, est de 1 : 2 au moins, de préférence de 1 : 3 au moins.
